**Europäisches Patentamt**

**European Patent Office**

**Office européen des brevets**

(19)

(11) Numéro de publication: **0 162 780**
**B1**

(12)
## FASCICULE DE BREVET EUROPEEN

(45) Date de publication du fascicule du brevet:
**01.06.88**

(51) Int. Cl.⁴: **H 02 K 29/00**

(21) Numéro de dépôt: **85400981.8**

(22) Date de dépôt: **20.05.85**

(54) Dispositif pour détecter la position angulaire du rotor d'une machine tournante.

(30) Priorité: **22.05.84 FR 8408300**

(43) Date de publication de la demande:
**27.11.85 Bulletin 85/48**

(45) Mention de la délivrance du brevet:
**01.06.88 Bulletin 88/22**

(84) Etats contractants désignés:
**CH DE GB IT LI**

(56) Documents cités:
**EP - A - 0 005 078**
**FR - A - 2 425 755**
**FR - A - 2 461 389**
**GB - A - 1 045 772**
**GB - A - 1 518 026**
**US - A - 4 080 553**

(73) Titulaire: **SOCIETE FRANCAISE D'EQUIPEMENTS POUR LA NAVIGATION AERIENNE (S.F.E.N.A.),**
**B.P. 59 Aérodrome de Villacoublay, F-78141 Velizy Villacoublay Cédex (FR)**

(72) Inventeur: **Kerviel, Alain, 12, Chemin des Gats, F-86100 Chatellerault (FR)**
Inventeur: **Barbarin, Rémy, 19, rue de la Béreillière, F-86100 Chatellerault (FR)**

(74) Mandataire: **Marquer, Francis et al, CABINET MOUTARD 35, avenue Victor Hugo Résidence Champfleury, F-78180 Voisins-le-Bretonneux (FR)**

## Description

La présente invention concerne un dispositif pour la détection de la position angulaire du rotor d'une machine électrique tournante telle qu'un moteur électrique à commutation électronique.

D'une manière générale, on sait qu'une machine électrique tournante se compose habituellement d'un stator et d'un rotor équipés de deux circuits magnétiques respectifs mutuellement en regard et comprenant chacun une pluralité de pôles magnétiques de polarité alternée.

Ainsi, dans certaines de ces machines, le stator est conçu de manière à induire un champ magnétique stationnaire, tandis que le rotor est muni d'enroulements d'induit créant un champ magnétique tournant. L'interaction entre le champ magnétique du rotor et celui du stator, décalés l'un par rapport à l'autre, forme un couple électromagnétique. Afin de former un couple de direction constante, le sens du courant dans chaque enroulement d'induit doit changer quand il passe d'un pôle magnétique à l'autre du stator, de polarité opposée. Ce changement est généralement assuré au moyen d'un commutateur destiné à alimenter les bobines d'induit en fonction des positions relatives des champs magnétiques de l'inducteur et de l'induit et d'un angle de décalage déterminé.

A l'inverse, selon un autre type de machine, le stator est muni d'enroulements inducteurs aptes à engendrer un champ magnétique tournant, tandis que le rotor est muni de pôles à champ magnétique constant. Dans ce cas, la machine comprend un commutateur permettant de changer le sens de courant dans les enroulements inducteurs en fonction de la position angulaire du rotor.

Dans un cas comme dans l'autre, le commutateur doit nécessairement faire intervenir un dispositif d'alimentation des différents enroulements dont on doit modifier le champ, un dispositif de détection de la position angulaire des pôles du rotor, et un sélecteur qui détermine le mode d'alimentation de ces enroulements en fonction de ladite position angulaire et du sens de rotation désiré.

En vue d'effectuer la détection de la position angulaire des pôles du rotor, de nombreuses solutions ont été déjà proposées, ces solutions faisant notamment intervenir des capteurs magnétiques, des capteurs capacitifs, des capteurs optiques ou même des capteurs à effet Hall.

Pour ce dernier type de capteurs, une solution couramment utilisée consiste à monter dans le stator une cellule à effet Hall qui fournit une tension représentative de la position du rotor par l'intermédiaire de son propre champ tournant, une solution de ce genre est décrite dans le brevet US-A-4080553. Toutefois, il s'avère que cette solution n'est pas toujours applicable et ne permet pas d'obtenir une bonne précision.

Une autre solution consiste à utiliser un disque codé, en matériau ferromagnétique monté en bout d'arbre du rotor et, disposés de part et d'autre de ce disque, en vis-à-vis, un aimant permanent et une cellule à effet Hall. Un inconvénient de ce montage consiste en ce que sous l'effet du champ magnétique de l'aimant permanent, le disque en matériau ferromagnétique est le siège de courants de Foucault qui risquent de perturber le fonctionnement du moteur. En outre, en raison de la présence du disque, l'entrefer entre l'aimant permanent et la cellule est relativement important, ce qui conduit à utiliser des aimants relativement puissants risquant d'engendrer des parasites magnétiques, et des cellules à haute sensibilité.

L'invention a donc pour but la réalisation d'un dispositif de détection utilisant des cellules à effet Hall qui soit exempt des inconvénients précédemment mentionnés et qui présente en outre les avantages suivants:

— une grande simplicité de conception et de mise en œuvre et, en conséquence, un prix de revient peu élevé,

— une bonne fiabilité et une bonne tenue à des températures élevées,

— une grande facilité de maintenance grâce à une indépendance structurale avec le reste du moteur, et

— une grande facilité de calage du détecteur par rapport aux bobinages statiques du moteur.

Pour parvenir à ce résultat, l'invention propose un dispositif pour la détection de la position angulaire du rotor d'une machine électrique tournante comprenant, à d'intérieur d'un corps, un rotor monté rotatif dans un stator, ledit stator et ledit rotor étant équipés de deux circuits magnétiques respectifs mutuellement en regard et comprenant une pluralité de pôles magnétiques de polarité alternée, ainsi que des cellules à effet Hall pour déterminer la position angulaire dudit rotor vis-à-vis dudit stator.

Selon l'invention, ce dispositif est plus particulièrement caractérisé en ce qu'il comprend:

— un disque additionnel distinct du rotor et du stator monté coaxialement sur l'arbre du rotor et comportant une face radiale sur laquelle sont fixés des aimants permanents de polarité alternativement inversée et produisant un champ magnétique indépendant de celui dudit rotor et dudit stator,

— des cellules de proximité à effet Hall disposées à proximité de ladite face radiale du disque et portées par une structure montée rotative sur le corps de la machine tournante coaxialement audit axe, et aptes à détecteur la composante axiale du champ magnétique émis par lesdits aimants permanents,

— des moyens permettant un blocage en rotation de ladite structure sur ledit corps.

Selon un mode d'exécution particulièrement avantageux de l'invention, les susdits aimants permanents présentent la forme de secteurs circulaires agencés concentriquement de manière à recouvrir la susdite face radiale du disque, la fixation de ces secteurs pouvant être réalisée par collage.

Il s'avère qu'en raison de la nature de l'induction magnétique au niveau de la transition d'un

secteur à un autre, le changement d'état des cellules se produit alternativement avant et après le passage d'un secteur à un autre. En conséquence, pour obtenir une détection correcte de la position, il convient d'adopter des angles de secteurs différents selon qu'il s'agit d'un secteur de pôle nord ou un secteur de pôle sud.

Bien entendu, l'invention s'applique aussi bien aux machines électriques à rotor interne qu'aux machines à rotor externe. Un mode de réalisation de l'invention sera décrit ci-après, à titre d'exemple non limitatif, avec référence aux dessins annexés dans lesquels:

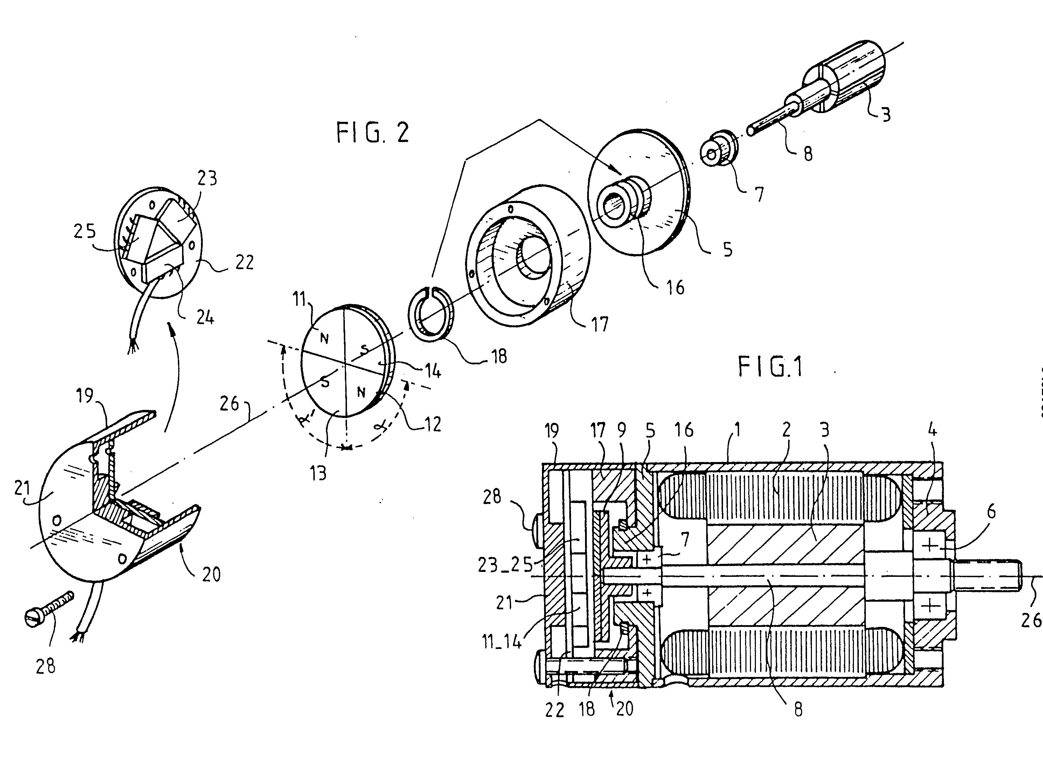

La fig. 1 est une coupe axiale d'un moteur équipé d'un dispositif de détection selon l'invention;

la fig. 2 est une vue éclatée schématique représentant la partie du moteur représenté fig. 1 sur laquelle est monté le dispositif de détection.

Tel que représenté sur ces figures, le moteur se compose, de façon classique, d'un corps tubulaire 1 renfermant un stator bobiné 2 à l'intérieur duquel est monté rotatif un rotor à aimant permanent 3. Ce corps 1 est refermé à chacune de ses extrémités par un opercule ou flasque avant 4 et un opercule arrière 5 comprenant chacun un palier à roulement à billes 6, 7 traversé par l'arbre 8 du rotor 3.

Sur l'extrémité de l'arbre 8 du rotor ressortant du palier 7 est monté un disque 9 dont la face radiale extérieure est recouverte par quatre aimants permanents 11, 12, 13, 14 en forme de secteurs circulaires concentriques, à savoir, deux aimants de pôle nord 11, 12 diamétralement opposés, et deux aimants de pôle sud 13, 14 également diamétralement opposés.

Ces aimants 11 à 14 peuvent consister en des aimants du type aggloméré avec liant plastique, de faible coût mais réservé aux températures inférieures à 80 °C ou métalliques aux terres rares pour des températures plus élevées.

Comme précédemment mentionné, pour tenir compte des flux de fuite entre aimants, les angles au centre α des aimants permanents de pôle nord 11, 12 sont différents des angles au centre α' des aimants permanents de pôle sud 13, 14. Cette différence angulaire dépend notamment de la distance entre les cellules à effet Hall utilisées et les aimants permanents 11 à 14, de la nature de l'aimant utilisé et de la sensibilité desdites cellules.

Par ailleurs, l'opercule arrière 5 comprend autour du palier 7, une partie manchonnée 16 qui s'étend axialement vers l'extérieur, sur laquelle est montée rotative une pièce annulaire 17, axialement retenue vers l'extérieur par un segment 18 monté dans une gorge circulaire prévue sur la partie manchonnée 16.

Sur la surface extérieure de cette pièce annulaire 17 vient s'engager la jupe tubulaire 19 d'un capot 20, dont le fond 21 porte, du côté intérieur, un circuit imprimé 22 comportant trois cellules à effet Hall 23, 24, 25 disposées selon un triangle équilatéral centré sur l'axe 26 de l'arbre 8 du rotor 3.

Ce circuit imprimé 22, qui présente une forme circulaire, est monté de telle manière qu'une fois le capot 20 assemblé sur la pièce annulaire 17, il s'étende parallèlement au disque 9 et que l'entrefer entre les cellules à effet Hall 23 à 25 et les aimants 11 à 14 du disque 9 soit aussi faible que possible.

La fixation du capot 20 sur la pièce annulaire 17 s'obtient par vissage au moyen de vis axiales 28.

L'invention ne se limite pas à ce seul type de montage et à cette fixation du capot. En effet, une solution moins coûteuse pourrait consister à prévoir sur l'opercule arrière 5, éventuellement dépourvu du manchonnage 16, un épaulement sur lequel vient s'engager le capot. Après le réglage angulaire du capot et par conséquent des cellules à effet Hall, la fixation pourrait être alors simplement obtenue par collage du capot 20 sur l'opercule 5, le calage du moteur étant alors réalisé au moment du collage.

Il est clair que selon la structure représentée sur les dessins, le réglage de la position angulaire des cellules à effet Hall 23 à 25 par rapport à la position angulaire des pôles du stator 2, c'est-à-dire le calage du dispositif de détection, peut être facilement obtenu en faisant pivoter l'ensemble formé par le capot 20, le circuit imprimé 22 muni de ses cellules à effet Hall 23 à 25 et la pièce annulaire 17 par rapport au corps 1 du moteur sans avoir à effectuer aucun démontage. Le blocage en position peut ensuite être obtenu par exemple au moyen d'une vis de pression, par exemple l'une des vis 28 venant en fin de course buter sur l'opercule 5. Par ailleurs, la maintenance du dispositif de détection et du circuit électronique qui lui est associé est considérablement facilitée par le fait que la partie du circuit de détection incorporé au moteur s'extrait en même temps que le capot 20 et peut ensuite être facilement testée ou même remplacée. On notera à ce sujet que le fait que les cellules à effet Hall 23, 24, 25 se trouvent montées sur une même plaquette à circuit imprimé 22, permet une intégration maximum des circuits électroniques associés et, en particulier, l'emploi de circuits intégrés ou de circuits hybrides comportant tout ou partie de la fonction de détection et de mise en forme du signal de détection. Dans cette configuration, le moteur avec son électronique devient interchangeable avec un moteur à balais collecteurs classiques.

Cette disposition et particulièrement avantageuse pour la réalisation de moteurs à circuits électroniques intégrés de petite taille, par exemple, de l'ordre de la dizaine de millimètres.

Bien entendu, l'invention ne se limite pas à un dispositif de détection faisant intervenir un disque 9 comprenant quatre aimants permanents 11, 12, 13, 14 et trois cellules à effet Hall.

En effet, le nombre des aimants utilisés ainsi que le nombre de cellules à effet Hall sont variables en fonction de la résolution que l'on veut obtenir.

## Revendications

1. Dispositif pour la détection de la position angulaire du rotor (3) d'une machine électrique tournante comprenant, à l'intérieur d'un corps (1), un rotor monté rotatif dans un stator, ledit stator (2) et ledit rotor (3) étant équipés de deux circuits magnétiques respectifs mutuellement en regard et comprenant une pluralité de pôles magnétiques de polarité alternée, ainsi que des cellules à effet Hall pour déterminer la position angulaire dudit rotor vis-à-vis dudit stator, caractérisé en ce qu'il comprend:

– un disque (9) additionnel distinct du rotor et du stator, monté coaxialement sur l'arbre (8) du rotor (3) et comportant une face radiale sur laquelle sont fixés des aimants permanents (11, 12, 13, 14) de polarité alternativement inversée et produisant un champ magnétique indépendant de celui dudit rotor et dudit stator,

– des cellules de proximité à effet Hall (23, 24, 25) disposées à proximité de ladite face radiale du disque (9) et portées par une structure (17, 20) montée rotative sur le corps (1) de la machine tournante coaxialement audit axe, et aptes à détecter la composante axiale du champ magnétique émis par lesdits aimants permanents,

– des moyens permettant un blocage en rotation de ladite structure (17) sur ledit corps (1).

2. Dispositif selon la revendication 1, caractérisé en ce que les susdits aimants permanents (11, 12, 13, 14) présentent la forme de secteurs circulaires jointifs agencés concentriquement de manière à recouvrir la susdite face radiale du disque (9).

3. Dispositif selon l'une des revendications 1 et 2, caractérisé en ce que les susdits aimants permanents (11, 12, 13, 14) sont collés sur la face radiale du disque (9).

4. Dispositif selon l'une des revendications 2 et 3, caractérisé en ce que l'angle (α, α') des susdits secteurs est différent selon qu'il s'agit d'un secteur de pôle nord ou d'un secteur de pôle sud.

5. Dispositif selon l'une des revendications précédentes, caractérisé en ce que la susdite structure sur laquelle sont montées les cellules de proximité (23, 24, 25) consiste au moins partiellement en un capot (20).

6. Dispositif selon l'une des revendications précédentes, caractérisé en ce que les cellules de proximité (23, 24, 25) sont montées sur une plaquette de circuit imprimé (22) ou substrat, solidaire de la susdite structure ou du susdit capot (20) et sensiblement parallèle au susdit disque (9).

7. Dispositif selon l'une des revendications 5 et 6, caractérisé en ce que le susdit corps (1) est refermé d'un côté par un opercule arrière (5) muni d'un palier (7) au travers duquel passe l'arbre (8) du rotor (3), en ce que le susdit disque (9) est monté sur l'extrémité dudit arbre (8) ressortant du palier (7), en ce que l'opercule (5) comprend, autour du palier (7), une partie manchonnée (16) qui s'étend axialement vers l'extérieur et sur laquelle est montée rotative une pièce annulaire (17) axialement retenue, et en ce que sur la surface extérieure de cette pièce annulaire (17) est engagée la jupe tubulaire (19) du susdit capot (20).

8. Dispositif selon la revendication 7, caractérisé en ce que la fixation du capot (20) sur la susdite pièce annulaire (17) est assurée par des vis axiales (28).

9. Dispositif selon la revendication 8, caractérisé en ce que le blocage en rotation du capot (20) est obtenu au moyen d'une des susdites vis (28) qui vient en fin de vissage, en butée sur le susdit opercule (5).

## Patentansprüche

1. Einrichtung zum Feststellen der Drehstellung des Rotors (3) einer rotierenden elektrischen Maschine, die, im Inneren eines Körpers (1), mit einem Rotor versehen ist, der rotierend in einem Stator angeordnet ist, wobei besagter Stator (2) und besagter Rotor (3) mit jeweils zwei einander gegenüberliegenden Magnetkreisen versehen sind, die eine Vielzahl von Magnetpolen mit abwechselnder Polarität enthalten sowie Halleffektzellen, um die Drehstellung des besagten Rotors im Verhältnis zum besagten Stator zu bestimmen, dadurch gekennzeichnet, dass sie aufweist:

– eine zusätzliche, vom Rotor und Stator verschiedene Scheibe (9), die koaxial auf dem Schaft (8) des Rotors (3) angebracht ist und eine radiale Fläche aufweist, auf der Dauermagneten (11, 12, 13, 14) mit abwechselnd entgegengesetzter Polarität befestigt sind, die ein Magnetfeld erzeugen, welches unabhängig von dem des Rotors und des Stators ist,

– Halleffekt-Näherungszellen (23, 24, 25), die in der Nähe der besagten radialen Fläche der Scheibe (9) angeordnet sind und von einer Struktur (17, 20) getragen werden, die drehbar auf dem Körper (1) der rotierenden Maschine angebracht ist, koaxial zur besagten Achse, und welche die axiale Komponente des von besagten Dauermagneten erzeugten Magnetfeldes erfassen können,

– Mittel, um besagte Struktur (17) auf besagtem Körper (1) gegen Drehung zu sichern.

2. Einrichtung nach Anspruch 1, dadurch gekennzeichnet, dass besagte Dauermagneten (11, 12, 13, 14) die Form von aneinandergrenzenden Kreisabschnitten haben, die konzentrisch angeordnet sind, um so die besagte radiale Fläche der Scheibe (9) zu überdecken.

3. Einrichtung nach einem der Ansprüche 1 und 2, dadurch gekennzeichnet, dass besagte Dauermagneten (11, 12, 13, 14) auf die radiale Fläche der Scheibe (9) geleimt sind.

4. Einrichtung nach einem der Ansprüche 2 und 3, dadurch gekennzeichnet, dass der Winkel (α, α') besagter Kreisabschnitte verschieden ist, je nachdem es sich um Nordpolabschnitte oder Südpolabschnitte handelt.

5. Einrichtung nach einem der vorhergehenden Ansprüche, dadurch gekennzeichnet, dass besagte Struktur auf der die Näherungszellen (23, 24, 25) angebracht sind, wenigstens teilweise aus einer Haube (20) besteht.

6. Einrichtung nach einem der vorhergehenden Ansprüche, dadurch gekennzeichnet, dass die Näherungszellen (23, 24, 25) auf einer gedruckten Schalterplatte (22) oder einem Substrat angebracht sind, die mit besagter Struktur oder besagter Haube (20) fest verbunden ist und im wesentlichen parallel zu besagter Scheibe (9) verläuft.

7. Einrichtung nach einem der Ansprüche 5 und 6, dadurch gekennzeichnet, dass besagter Körper (1) auf einer Seite durch einen hinteren Verschluss (5) verschlossen ist, der mit einem Lager (7) versehen ist, durch welches die Achse (8) des Rotors (3) hindurchführt, dass besagte Scheibe (9) am aus dem Lager (7) herausragenden Ende der besagten Achse (8) angebracht ist, dass der Verschluss (5), um das Lager (7) herum, einen stutzenartigen Abschnitt (16) aufweist, der sich axial nach aussen hin erstreckt und auf dem ein axial befestigter ringförmiger Teil (17) drehbar angeordnet ist, und dass auf der Aussenfläche des besagten ringförmigen Teils (17) der röhrenförmige Mantel (19) der besagten Haube (20) angreift.

8. Einrichtung nach Anspruch 7, dadurch gekennzeichnet, dass besagte Haube (20) auf besagtem ringförmigen Teil (17) durch Axialschrauben (28) befestigt ist.

9. Einrichtung nach Anspruch 8, dadurch gekennzeichnet, dass die Haube (20) mittels einer der besagten Schrauben (28) drehgesichert wird, die, wenn völlig eingeschraubt, gegen besagten Verschluss (5) zum Anschlag kommt.

## Claims

1. A device for detecting the angular position of the rotor (3) of a rotating electric machine comprising, inside a body (1), a rotor mounted for rotation in a stator, said stator (2) and said rotor (3) being equipped with two respective mutually facing magnetic circuits and comprising a plurality of magnetic poles of alternating polarity, as well as Hall effect cells for determining the angular position of said rotor with rerspect to said stator, characterized in that it comprises:

– an additional disk (9) distinct from the rotor and the stator and mounted coaxially on the shaft (8) of the rotor (3) and comprising a radial face on which are fixed permanent magnets (11, 12, 13, 14) of alternately reversed polarity producing a magnetic field independant of that of said rotor and said stator,

– Hall effect proximity cells (23, 24, 25) disposed in the vicinity of said radial face of the disk (9) and carried by a structure (17, 20) mounted for rotation on the body (1) of the rotary machine coaxially with said axis, and adapted for detecting the axial component of the magnetic field emitted by said permanent magnets,

– means for locking said structure (17) against rotation on said body (1).

2. The device as claimed in claim 1, characterized in that said permanent magnets (11, 12, 13, 14) are in the form of circular jointing sectors arranged concentrically so as to cover said radial face of the disk (9).

3. The device as claimed in one of claims 1 and 2, characterized in that said permanent magnets (11, 12, 13, 14) are bonded ot the radial face of the disk (9).

4. The device as claimed in one of claims 2 and 3, characterized in that the angle ($\alpha$, $\alpha'$) of said sectors is different depending on whether it is a question of a North pole sector or a South pole sector.

5. The device as claimed in one of the preceding claims, characterized in that said structure on which the proximity cells (23, 24, 25) are mounted consists at least partially of a cover (20).

6. The device as claimed in one of the preceding claims, characterized in that said proximity cells (23, 24, 25) are mounted on a printed circuit board (22) or substrate, secured to said structure or said cover (20) and substantially parallel to said disk (9).

7. The device as claimed in claims 5 and 6, characterized in that said body (1) is closed on one side by a rear lid (5) having a bearing (7) through which the shaft (8) of said rotor (3) passes, that said disk (9) is mounted on the end of said shaft (8) projecting from said bearing (7), that said lid (5) comprises, around said bearing (7), a sleeved part (16) which extends axially outwardly and on which an axially retained annular piece (17) is mounted for rotation, and on the outer surface of said annular piece (17) is engaged the tubular skirt (19) of said cover (20).

8. The device as claimed in claim 7, characterized in that said cover (20) is fixed to said annular piece (17) by means of axial screws (28).

9. The device as claimed in claim 8, characterized in that said cover (20) is locked against rotation by means of one of said screws (28) which, at the end of screwing up, comes into abutment against said lid (5).

FIG.1

FIG.2